Europäisches Patentamt

European Patent Office

Office européen des brevets

(11) Publication number: **0 485 017 A2**

# EUROPEAN PATENT APPLICATION

(21) Application number: **91202817.2**

(22) Date of filing: **31.10.91**

(51) Int. Cl.5: **G02F 1/1337**

(30) Priority: **07.11.90 US 610189**

(43) Date of publication of application:
**13.05.92 Bulletin 92/20**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Sorkin, Howard**
**c/o INT. OCTROOIBUREAU B.V., Prof.**
**Holstlaan 6**
**NL-5656 AA Eindhoven(NL)**

(74) Representative: **Raap, Adriaan Yde et al**
**INTERNATIONAAL OCTROOIBUREAU B.V.**
**Prof. Holstlaan 6**
**NL-5656 AA Eindhoven(NL)**

(54) Active matrix liquid crystal display device with dark matrix interpixel areas.

(57) Using photolithography, the spaces between pixels of a matrix liquid crystal display device are covered with an orienting layer (6) whose orienting direction is the same as that of the orienting layer on the counterelectrode (80). In operation, with crossed polarizer and analyzer, linearly polarized light passing through the liquid crystal in the interpixel area is not rotated by the liquid crystal and is accordingly blocked by the analyzer. The resulting dark interpixel area enhances the contrast of the liquid crystal display.

FIG.10

This invention relates to a matrix liquid crystal display (LCD) device, having an array of display cells defined by an array of pixel electrodes, and more particularly relates to such a device having dark interpixel areas, and also relates to methods of producing such a device.

Liquid crystal devices currently being developed for television applications are of the active matrix type in which an array of display cells is defined by an array of pixel electrodes on one wall of the device, and in which the display cells are controlled by a matrix of row and column electrodes connected to the pixel electrodes through switches, e.g., thin film transistors.

In one preferred form of such an active matrix liquid crystal display device, known as a twisted nematic display device, aligning layers are oriented on the inner walls of the device to have mutually orthogonal alignment directions, thereby aligning the adjacent molecules of a nematic liquid crystal and imparting a 90 degree twist to the liquid crystal from one wall to the other.

In operation, incoming light to be modulated enters the device through a polarizer having its polarization direction aligned with the adjacent alignment layer. This linearly polarized light is rotated 90 degrees, as it travels through the liquid crystal, and exits the device through an analyzer having its polarization direction aligned with the opposing alignment layer. Upon application of a voltage sufficient to untwist the liquid crystal molecules, the light is no longer rotated and is thus blocked by the analyzer, giving a dark "on" condition. Application of intermediate voltage values result in intermediate or "grey" levels.

It is known that the contrast of such devices can be enhanced by darkening the spaces between the pixel electrodes (herein referred to as the "interpixel area"). For example, inJapanese Patent Abstract 62-91920, the matrix is darkened by omitting the liquid crystal aligning layer in this area. Thus, the adjacent liquid crystal molecules are not aligned, and the light is scattered.

In Japanese Patent Abstract 62-144133, a similar result is achieved by irradiating the interpixel area of a rubbed aligning layer with ultraviolet light in order to neutralize the aligning ability of the layer.

A problem with both of these approaches is that the light is scattered, not blocked, so that some light gets through the analyzer. Thus, the contrast of the display is not enhanced as much as it could be if the area were completely dark.

Other known methods for producing a dark interpixel area call for evaporation or sputtering a layer of light absorbing or reflective materials on either the array or the counterelectrode. Forming such a layer on the array can produce electrical shorts, and heating of the device through light absorption. Forming of the layer on the counterelectrode requires precision alignment techniques to align the layer with the array of pixel electrodes.

Accordingly, one object of the invention is to enhance the contrast of a matrix liquid crystal display device by blocking the light in the interpixe] area.

Another object of the invention is to provide a matrix liquid crystal display device which includes means for blocking the light in the interpixel area, which means does not increase the risk of electrical shorts or heating through light absorption and do not require precision alignment of pixel electrodes with the counterelectrode.

Another object of the invention is to provide methods for producing such a device.

According to the invention, a matrix liquid crystal display device for modulating incoming light comprises opposing walls, at least one of which is optically transparent, a liquid crystal material sandwiched between the walls, an array of pixel electrodes on the inner surface of one of the walls, at least one counterelectrode on the inner surface of the opposing wall, the pixel electrodes defining an array of discrete display cells in the liquid crystal material, and aligning layers overlying the electrodes are in contact with the liquid crystal material, each layer having a single alignment direction for aligning the liquid crystal molecules adjacent the layers, the aligning layers each oriented to have their alignment directions differ from the other, to thereby impart a twist to the liquid crystal molecules between the layers is characterized in that at least a portion of the interpixel area surrounding the pixel electrodes on one wall has a aligning layer with its alignment direction substantially the same as that of the aligning layer on the opposing wall, to thereby produce a parallel alignment of the liquid crystal molecules between the opposing layers in the interpixel area, whereby in operation between a polarizer and an analyzer, the polarizer located in the path of the incoming light to be modulated, and having its polarization direction corresponding to that of one of the aligning layers, and an analyser located in the path of the light transmitted by the liquid crystal material, and having its polarization direction corresponding to that of the other aligning layer, light in the interpixel area is blocked.

According to a preferred embodiment of the invention, the liquid crystal material is a nematic liquid crystal material, and the different alignment directions form an angle of 90 degrees, to impart a 90 degree twist to the liquid crystal material between the layers in the display area.

In operation of a twisted nematic cell with crossed polarizers, where the alignment direction on the pixel electrodes is orthogonal to that on the interpixel area and the counterelectrode, incoming light is first linearly polarized by the polarizer, and then the portion of this light passing through the display cells is twisted 90 degrees, after which it passes through the analyzer. Due to the parallel alignment of the liquid crystal molecules in the interpixel area, the portion of the light passing through this area is not twisted, and is thus blocked by the analyzer. Upon application of a voltage to reduce the twist in the display cells, the parallel alignment of the liquid crystal molecules in the interpixel area is unaffected, so that the light in this area continues to be blocked by the analyzer. Since the light is blocked and not scattered in the interpixel area a high contrast is obtained.

According to another aspect of the invention, there is provided a first method of producing a matrix liquid crystal display device, the method comprising the steps of:

a. forming an array of pixel electrodes on a substrate;

b. forming a first liquid crystal aligning layer having a first alignment direction over the pixel array;

c. photolithographically forming a patterned mask on the first aligning layer over the pixel electrodes;

d. forming a second aligning layer having a second alignment direction on the mask and the exposed portions of the first layer; and

e. stripping the mask to leave the second layer in the interpixel area surrounding the pixel areas.

A second method of producing a matrix liquid crystal display device comprises the steps of:

a. forming an array of pixel electrodes on a substrate;

b. forming a first liquid crystal aligning layer having a first alignment direction over the pixel array;

c. photolithographically forming a patterned mask on the first aligning layer over the interpixel area surrounding the pixel electrodes;

d. forming a second aligning layer having a second alignment direction on the mask and the exposed portions of the first layer; and

e. stripping the mask to leave the second layer in the pixel areas.

Since in both methods the light-absorbing layer is provided on the same substrate as the pixel electrodes, the presence of this layer does not influence the alignment of said substrates relative to each other.

In an alternate embodiment of these methods, prior to forming the second aligning layer, the exposed portions of the first aligning layer are removed.

Also in accordance with these methods, a counterelectrode and a third aligning layer having a third alignment direction are formed on another substrate, and a liquid crystal material is sandwiched between the substrates in a manner such that the second and third alignment directions are substantially the same.

In accordance with a preferred embodiment of these methods, the liquid crystal material is a nematic, and the difference between the first and second alignment directions is 90 degrees.

Fig. 1 is a diagrammatic cross-section of a matrix LCD of the prior art;

Fig. 2 is a diagrammatic perspective view of a portion of an active matrix TFT-switched LCD of the prior art;

Figs. 3-15 are diagrammatic cross-sections along line III-III of Fig. 2, illustrating various stages in the manufacture of a LCD of the invention according to the methods of the invention.

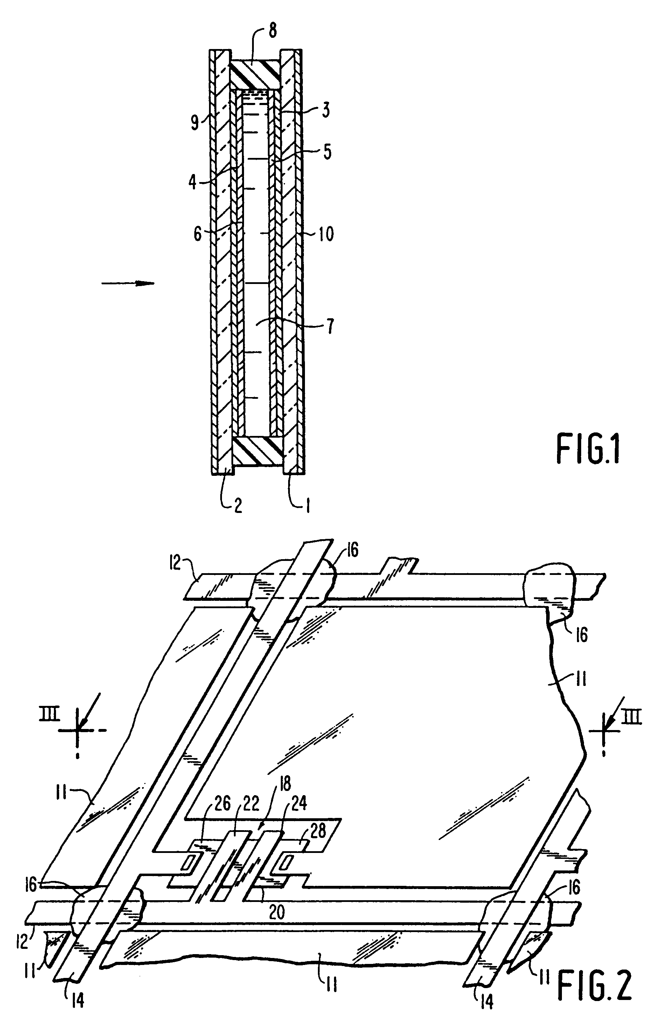

A cross section of a twisted nematic LCD of the prior art for operation in the transmissive mode is shown in Fig. 1; Of two glass supporting plates 1 and 2, supporting plate 1 carries on its inner surface a pattern of row and column electrodes, and an array of pixel electrodes and associated TFTs, illustrated schematically as layer 3. Supporting plate 2 carries a transparent counterelectrode 4. Orienting layers 5 and 6 are present on the inner surfaces of the layer 3 and the counterelectrode 4, these orienting layers formed for example by vapor deposition of silicon monoxide (SiO) at an oblique angle to the normal of the surfaces. A nematic liquid crystal material 7, such as the proprietary formulation known as ZLI 84-460, manufactured by E. Merck of Darmstadt, West Germany, containing a chiral addition of, for example, n-cyano-4'-(2-methyl)-isobutyl-biphenyl (obtainable as CB15 from BDH Chemicals, Poole, England) is present between the supporting plates. The spacing between the plates is typically in the range of about 6-8 microns, and is maintained by spacer beads (not shown) which are distributed regularly over the surfaces of the plates. A sealing gasket 8 joins the plates together.

The silicon monoxide layers each exhibit a direction of orientation, along which the adjacent liquid crystal molecules tend to align themselves. Because these molecules also tend to align with one another, a mutually orthogonal arrangement of the silicon monoxide alignment directions results in the liquid crystal molecules undergoing a rotation of approximately 90° across the cell thickness.

The chiral additive determines the direction of twist of the liquid crystal molecules, CB15 imparting a counter-clockwise twist.

The outer surfaces of the supporting plates 1 and 2 furthermore each carry a linear polarizer. Polarizer 9 intercepts the incident light, indicated by the arrow in the drawing, and analyzer 10 intercepts the light transmitted by the device.

With a mutually orthogonal orientation of polarizer and analyzer, linearly polarized incident light is rotated 90° by the LC cell and transmitted by the analyzer. Upon application of a voltage, the LC molecules untwist, and light is blocked, the amount dependent on degree of twist, which is in turn dependent on the magnitude of the voltage applied.

Fig. 2 shows a portion of a prior art arrangement including a pixel and the surrounding area of an active matrix TFT-switched LCD for operation in the transmissive mode, in which an array of thin transparent pixel electrodes 11, here of indium tin oxide (ITO), are arranged on a glass substrate (not shown) in a matrix of row and column electrodes 12 and 14, respectively, separated by a cross-over dielectric 16, here of chemically vapor deposited (CVD) oxide. Each pixel electrode 11 is accessed through a thin film switch such as a TFT 18 (only one of which is shown in the figure). The switch includes a polysilicon layer 20, one or more gate electrodes 22 and 24, which overlie channel regions (not shown) in layer 20 and which are connected to the polysilicon row electrode (also known as a gate line) 12, a gate dielectric under the gate electrodes (not shown), and source and drain regions 26 and 28, which are respectively connected to the aluminium column electrode (also known as a source line) 14 and to the pixel electrode 11.

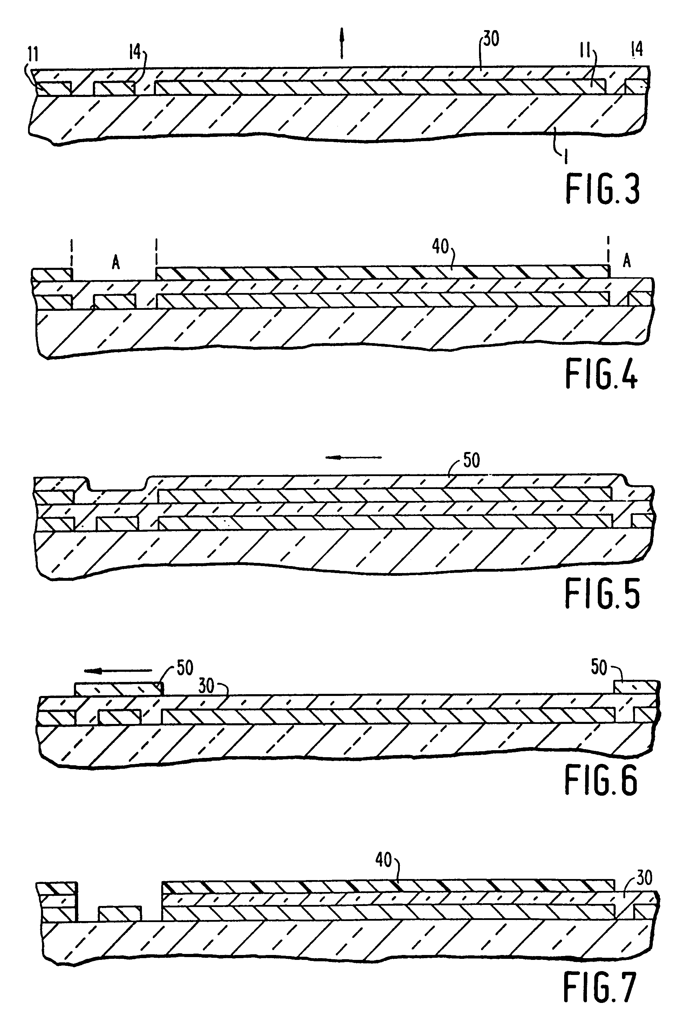

Referring now to Fig. 3, there is shown in cross-section as viewed along the line III-III of Fig. 2, the pixels 11 and column electrodes 14, supported by a transparent substrate 1, which may be, for example, quartz or a silica based glass.

In accordance with the first method of the invention, an orienting layer 30, produced for example by the oblique vapor deposition of silicon monoxide, is deposited on the array as shown in Fig. 3, in a manner to achieve an orienting direction which is perpendicular to the plane of the drawing. Next, a photoresist layer 40 is deposited on orienting layer 30 and patterned to cover the pixel electrodes 11, leaving exposed the interpixel areas A, as shown in Fig. 4. Next, a second orienting layer 50 is formed over the patterned photoresist layer 40 in a manner to achieve an orienting direction which is orthogonal to that of orienting layer 30, as shown by the arrow in Fig. 5. Following this, the photoresist layer 40 is stripped away in the conventional manner, that is, by treating the surface with a selective solvent, termed a "developer", resulting in a pattern of orienting layer 50 in the interpixel area A, as shown in Fig. 6.

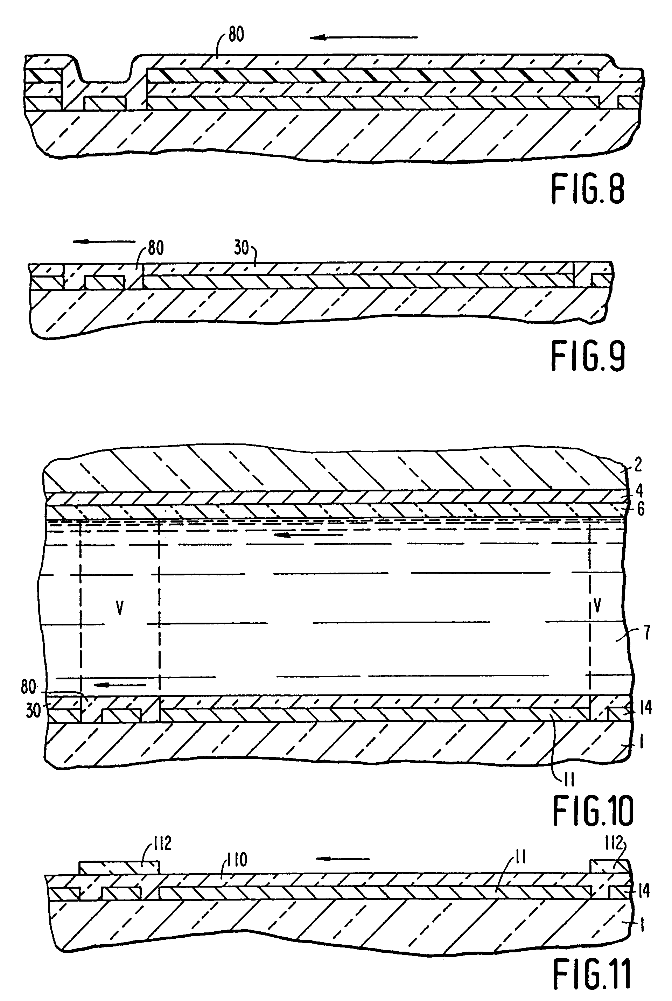

In an alternative embodiment of this first method of the invention, prior to application of orienting layer 50 as shown in Fig. 5, the exposed portions of orienting layer 30 are removed from the interpixel area A, as shown in Fig. 7. In the case of silicon oxide, a suitable etchant would be buffered HF. Orienting layer 80 is then formed as shown in Fig. 8, and the photoresist pattern is stripped away to leave the structure shown in Fig. 9.

Fig. 10 shows an assembled liquid crystal display cell in which liquid crystal material 7 is sandwiched between transparent substrates 1 and 2. Substrate 1, carrying the structure shown in Fig. 9, and substrate 2, carrying a counterelectrode 4 and an orienting layer 6 have been assembled so that layer 6 has its orienting direction the same as that of layer 80 in the interpixel area A. When projected across the display cell to the opposite wall, area A forms volume V, indicated by the dashed lines in Fig. 10. Because the orienting directions of layers 6 and 80 are the same within the interpixel area, the liquid crystal material within volume V has no twist. Thus in operation between crossed polarizer and analyzer, light which is linearly polarized by the polarizer passes without rotation through volume V and is blocked by the analyzer.

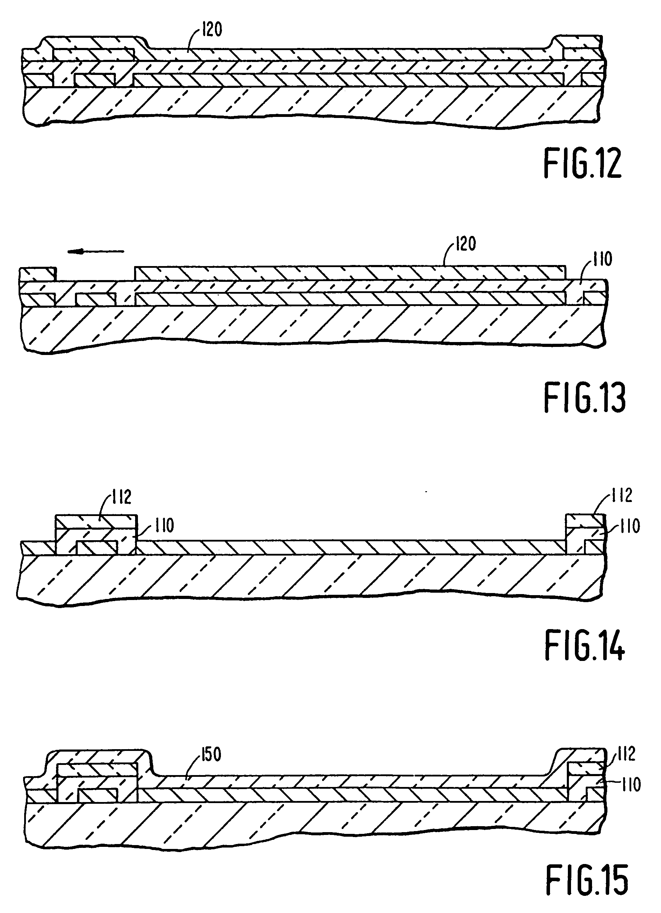

In a second method in accordance with the invention, an orienting layer 110 is formed on the array having an orienting direction as indicated by the arrow in Fig. 11. Following this, a photoresist layer 112 is deposited and patterned to cover the interpixel area A. Following this, a second orienting layer 120 is formed as shown in Fig. 12, having its orientation direction perpendicular to the plane of the drawing and orthogonal to that of layer 110. Following this, the photoresist layer 112 is stripped away leaving orienting layer 120 patterned to cover the pixel areas, as shown in Fig. 13.

In an alternative embodiment of the second method of the invention, following formation of orienting layer 110 and formation and patterning of photoresist layer 112, the exposed portions of orienting layer 110 covering the pixel electrodes are removed, to leave the structure shown in Fig. 14. Following this, orienting layer 150 is deposited as shown in Fig. 15, with its orienting direction orthogonal to that of layer 110, as shown in Fig. 15, and the photoresist layer 112 is stripped away to leave a structure like that shown in Fig. 9, with layer 110 corresponding to layer 80 and layer 150 corresponding to layer 30 in Fig. 9. The resulting structure can then be assembled into a liquid crystal display cell in the manner shown in Fig. 10, so that the orienting direction of the layer in the interpixel area is again the same as that of the orienting layer 6 on counterelectrode 4.

The invention has been described in terms of a limited number of embodiments. Other embodiments within the scope of the invention and the appended claims are contemplated. For example, the pixels of the array need not be switched by a three terminal device such as a thin film transistor, but may also be switched by a two terminal device, for example, a non-linear switch such as a diode or MIM. In addition, the electro-optic medium need not be a 90° twisted nematic liquid crystal, but could be another type of liquid crystal such as a supertwist liquid crystal. Furthermore, the display device need not be a light valve operating in the transmissive mode, but could also operate in the reflective mode.

Also, while the invention has been described in terms of forming separate aligning layers on the pixels and the interpixel area, respectively, it is also contemplated that a single aligning layer could be used, then treated in situ to provided different alignment directions in the respective areas.

## Claims

1. A matrix liquid crystal display device for modulating incoming light by electrically varying the transmissivity of the device, the device comprising opposing walls, at least one of which is optically transparent, a liquid crystal material sandwiched between the walls, an array of pixel electrodes on the inner surface of one of the walls, at least one counter-electrode on the inner surface of the opposing wall, the pixel electrodes defining an array of discrete display cells in the liquid crystal material, and first and second aligning layers overlying the electrodes and in contact with the liquid crystal material, each aligning layer having an alignment direction for aligning the liquid crystal molecules adjacent the layer, the aligning layers each oriented to have their alignment directions differ from the other, to thereby produce a twist of the liquid crystal material between the aligning layers, characterized in that in at least a portion of the interpixel area surrounding the pixel electrodes on the one wall, an aligning layer is provided with its alignment direction different from that for the pixel electrodes, and substantially the same as that for the opposing wall, to thereby produce a parallel alignment of the liquid crystal molecules between the opposing layers in the interpixel area.

2. The device of Claim 1 in which two separate aligning layers are provided on the wall supporting the pixel electrodes.

3. The device of Claim 2 in which the liquid crystal material is a nematic liquid crystal material, and in which the different alignment directions form an angle of 90 degrees, to produce a 90 degree twist of the liquid crystal molecules between the opposing layers in the pixel areas.

4. The device of Claim 3 in which a polarizer and an analyzer are provided, the polarizer located in the path of the incoming light to be modulated, and having its polarization direction corresponding to that of one of the alignment directions, and the analyzer located in the path of the light transmitted by the liquid crystal material, and having its polarization direction corresponding to that of the other alignment direction.

5. A method of producing a matrix liquid crystal display device, the method comprising the steps of:
   a. forming an array of pixel electrodes on a substrate;
   b. forming a first liquid crystal aligning layer having a first alignment direction over the pixel array;
   c. photolithographically forming a patterned mask on the first aligning layer over the pixel electrodes;
   d. forming a second aligning layer having a second alignment direction on the mask and the exposed portions of the first layer; and
   e. stripping the mask to leave the second layer in the interpixel area surrounding the pixel areas.

6. The method of Claim 5 in which prior to forming the second aligning layer, the exposed portions of the first aligning layer are removed.

7. The method of Claim 5 in which a counterelectrode and a third aligning layer having a third alignment direction are formed on another substrate, and a liquid crystal material is sandwiched between the substrates in a manner such that the second and third alignment directions are substantially the same.

8. A method of producing a matrix liquid crystal display device, the method comprising the steps of:
   a. forming an array of pixel electrodes on a substrate;

b. forming a first liquid crystal aligning layer having a first alignment direction over the pixel array;

c. photolithographically forming a patterned mask on the aligning layer over the interpixel area surrounding the pixel electrodes;

d. forming a second aligning layer having a second alignment direction on the mask and the exposed portions of the first layer; and

e. stripping the mask to leave the second layer in the pixel areas.

9. The method of Claim 8 in which prior to forming the second aligning layer, the exposed portions of the first aligning layer are removed.

10. The method of Claim 8 in which a counterelectrode and a third aligning layer having a third alignment direction are formed on another substrate, and a liquid crystal material is sandwiched between the substrates in a manner such that the second and third alignment directions are substantially the same.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15